# EUROPEAN PATENT APPLICATION

(11) **EP 4 305 955 A1**
(43) Date of publication of application: **17.01.2024**
(21) Application number: 22197428.0
(22) Date of filing: 23.09.2022
(51) Int. Cl.: A01K 1/035, A01K 15/02

(54) **SINGLE PLATE FOR ASSEMBLING CAT CLIMBING FRAME AND CAT CLIMBING FRAME THEREOF**

(30) Priority: 14.07.2022 CN 202221875925 U
(71) Applicant: Ziel Home Furnishing Technology Co., Ltd., Zhengzhou City, Henan Pronvince (CN)
(72) Inventor: Song, Chuan, Zhengzhou (CN)
(74) Representative: Zaboliene, Reda

(57) **Abstract**

The present disclosure provides a single plate for assembling a cat climbing frame and a cat climbing frame thereof, belonging to the technical field of pet products. The single plate comprises a panel and a circular plate, wherein the panels are provided with an open hole, and the panels are capable of being spliced into a cat climbing frame; the circular plate is detachably connected to the open hole of the panel, and the circular plate is capable of being folded, so that the circular plate is capable of completely or partially closing the open hole selectively. The center of the panel is provided with an open hole, which can be used for cats to shuttle and play. As the circular plate is detachably connected to the open hole of the panel, the circular plate can be folded, so that the circular plate can completely or partially close the open hole selectively. When the open hole is not needed or only the semi-open hole is reserved, it is only necessary to completely or partially close the open hole through the circular plate, which greatly facilitates the trepanning of the single plate, improves the flexibility of the cat climbing frame, avoids replacing the single plate, reassembles the cat climbing frame, and saves manpower.

## Description

### TECHNICAL FIELD

The present disclosure belongs to the technical field of pet products, and in particular relates to a single plate for assembling a cat climbing frame and a cat climbing frame thereof.

### BACKGROUND

A cat climbing frame is a frame specially designed for cats, which can provide space and three-dimensional structure for cats to rest and play, and can even be used for training. The cat climbing frame is a fashionable pet product. With the improvement of living standard of people, more and more people keep pets. The cat climbing frame, which is a fashionable pet product, has gradually entered the life of people.

There are various types of cat climbing frames on the market, and even cat climbing frames with different structures and sizes can be selected according to different types of cats. However, these cat climbing frames generally have the following disadvantages. 1. The cat climbing frame is spliced by a plurality of plates, and the plate is provided with an open hole for cats to shuttle. However, when there is no need for an open hole or only a semi-open hole is reserved, the plate with no open hole or only a semi-open hole can only be replaced, which needs to be reassembled and is time-consuming and laborious. 2. The plates of the cat climbing frame are connected and fixed by bolts or rivets. However, when transferring the cat climbing frame, the bolts or rivets need to be detached, then transferred, and then spliced and fixed by bolts or rivets. In the process of detaching or installing the bolts or rivets, it is very easy to destroy the plates and affect the quality of the cat climbing frame.

### SUMMARY

In view of this, in order to solve the problems in the prior art, the present disclosure proposes a single plate for assembling a cat climbing frame. The technical problem to be solved by the present disclosure is how to facilitate the trepanning of the single plate and the splicing of the cat climbing frame.

The present disclosure solves the above problems by the following technical means.

A single plate for assembling a cat climbing frame is provided, comprising:
a panel, wherein the panel is provided with an open hole, and the panel is capable of being spliced into a cat climbing frame;
a circular plate, wherein the circular plate is detachably connected to the open hole of the panel, and the circular plate is capable of being folded, so that the circular plate is capable of completely or partially closing the open hole selectively.

In the single plate for assembling a cat climbing frame, the periphery of the open hole is provided with a plurality of clamping blocks, the periphery of the circular plate is provided with a plurality of slots corresponding to the clamping blocks one by one, and the circular plate is clamped to the slots through the clamping blocks.

In the single plate for assembling a cat climbing frame, the periphery of the circular plate is provided with notches with the same number as the slots, and the notches are communicated with the slots.

In the single plate for assembling a cat climbing frame, the panel is provided with a mortise, and two panels are inserted into the mortises through a first connector or a second connector to realize the splicing between the two panels.

In the single plate for assembling a cat climbing frame, the lengths of the slot, the notch and the clamping block are equal.

In the single plate for assembling a cat climbing frame, the open hole is provided with four limiting holes at intervals, and either side of the circular plate is provided with a contact bead, and the contact beads are preferably clamped in the two opposite limiting holes.

In the single plate for assembling a cat climbing frame, the circular plate comprises a first semicircular plate and a second semicircular plate, the first semicircular plate is rotatably connected with the second semicircular plate; when the first semicircular plate and the second semicircular plate are on the same plane, the circular plate completely closes the open hole; when the second semicircular plate rotates at 90 degrees towards the first semicircular plate, the first semicircular plate closes the lower half of the open hole.

In the single plate for assembling a cat climbing frame, the first semicircular plate is provided with a convex part, the second semicircular plate is provided with a concave part consistent with the convex part, either side of the convex part is provided with a rotating shaft, either sideof the concave part is provided with rotating holes, and the rotating shafts are rotatably connected in the rotating holes.

In the single plate for assembling a cat climbing frame, the circular plate is provided with a supporting block, the supporting block is provided with two plug-in blocks at 90 degrees, the first semicircular plate and the second semicircular plate are both provided with jacks, one of the plug-in blocks is inserted into the jack of the first semicircular plate, and the other plug-in block is inserted into the jack of the second semicircular plate.

In the single plate for assembling a cat climbing frame, the circular plate is provided with a hand-clasping position.

In the single plate for assembling a cat climbing frame, the circular plate comprises an unfolding part, a bending part and a closing part, and the unfolding part, the bending part and the closing part are connected in sequence to form a circular plate.

In the single plate for assembling a cat climbing frame, the unfolding part is provided with a groove, the panel is provided with a bump, the groove corresponds to the bump, and the bump can be clamped in the groove; the closing part is provided with a first chute, the panel is provided with a first bolt hole, the first chute corresponds to the first bolt hole, and the closing part is fixed to the first bolt hole through the first chute via a first bolt.

In the single plate for assembling a cat climbing frame, the folding part is provided with a plurality of V-shaped grooves.

In the single plate for assembling a cat climbing frame, a plurality of limiting protrusions are provided on the periphery of the circular plate, and a plurality of limiting grooves corresponding to the limiting protrusions one by one are provided on the periphery of the open hole.

In the single plate for assembling a cat climbing frame, the open hole is provided with four second bolt holes at intervals, either side of the circular plate is provided with a second chute, two of the second chutes correspond to two of the second bolt holes, and the circular plate is fixed in the second bolt hole through the second chute via a second bolt.

In the single plate for assembling a cat climbing frame, the bottom of the open hole is provided with a third bolt hole, the bottom of the circular plate is provided with a third chute, the third chute corresponds to the third bolt hole, and the bottom of the circular plate is fixed in the third bolt hole through the third chute via a third bolt.

Another object of the present disclosure is to provide a cat climbing frame.

The purpose of the present disclosure can be achieved by the following technical scheme,

A cat climbing frame is provided, comprising:
a plurality of single plates described above, wherein the plurality of single plates are enclosed into a cat climbing frame, and two adjacent single plates are perpendicular to each other;
a first connector, wherein the first connector is inserted into the mortise of two adjacent single plates.

In the cat climbing frame described above, the first connector comprises a first tenon and a second tenon which are fixedly connected, the first tenon and the second tenon are provided oppositely, and the first tenon and the second tenon are inserted into the mortises of two adjacent single plates.

In the cat climbing frame described above, the cat climbing frame further comprises a cat climbing column, and the cat climbing column is fixedly connected between an upper single plate and a lower single plate provided oppositely by rivets.

In the cat climbing frame described above, the rivet comprises a fixing part, both ends of the fixing part are provided with a first clamping part and a second clamping part, respectively, the single plate is provided with a first connecting hole, the cat climbing column is provided with a second connecting hole, the first clamping part is clamped to the first connecting hole, and the second clamping part is clamped to the second connecting hole.

Another object of the present disclosure is to provide another cat climbing frame.

The purpose of the present disclosure can be achieved by the following technical scheme.

A cat climbing frame is provided, comprising:
a plurality of single plates described above, wherein two adjacent single plates are located on the same plane;
a second connector, wherein the second connector is inserted into the mortise of two adjacent single plates.

In the cat climbing frame described above, the second connector comprises a connecting block, a third tenon and a fourth tenon, the third tenon and the fourth tenon are both fixedly connected to the connecting block, the third tenon and the fourth tenon are provided at an included angle, and the third tenon and the fourth tenon are inserted into the mortises of two adjacent single plates provided horizontally, respectively.

Another object of the present disclosure is to provide another cat climbing frame.

The purpose of the present disclosure can be achieved by the following technical scheme.

A cat climbing frame is provided, comprising:
N+M single plates described above, where N+M is greater than or equal to 3 and M is greater than or equal to 2;
wherein M single plates are enclosed into a cat climbing frame body, and two adjacent single plates in the frame body are perpendicular to each other;
N single plates and the adjacent single plates thereof are located on the same plane;
a first connector, wherein the first connector is inserted into the mortise of two adjacent single plates provided vertically;
a second connector, wherein the second connector is inserted into the mortise of two adjacent single plates on the same plane.

In the cat climbing frame described above, the first connector comprises a first tenon and a second tenon which are fixedly connected, the first tenon and the second tenon are provided oppositely, and the first tenon and the second tenon are inserted into the mortises of two adjacent single plates provided vertically, respectively.

In the cat climbing frame described above, the second connector comprises a connecting block, a third tenon and a fourth tenon, the third tenon and the fourth tenon are both fixedly connected to the connecting block, the third tenon and the fourth tenon are provided at an included angle, and the third tenon and the fourth tenon are inserted into the mortises of two adjacent single plates provided horizontally, respectively.

In the cat climbing frame described above, the cat climbing frame further comprises a cat climbing column, and the cat climbing column is fixedly connected between an upper single plate and a lower single plate which are provided oppositely by rivets.

In the cat climbing frame described above, the rivet comprises a fixing part, both ends of the fixing part are provided with a first clamping part and a second clamping part, respectively, the single plate is provided with a first connecting hole, the cat climbing column is provided with a second connecting hole, the first clamping part is clamped to the first connecting hole, and the second clamping part is clamped to the second connecting hole.

In the cat climbing frame described above, the panel is provided with a slot, the slot is provided with a connecting sleeve, the connecting sleeve is provided with a connecting groove, and two adjacent panels are inserted into the connecting groove through the first connector to realize splicing between the two panels.

In the cat climbing frame described above, a plurality of fixing holes are provided in the slot, a plurality of fixing pins corresponding to the fixing holes one by one are provided on the connecting sleeve, and the connecting sleeve is inserted into the fixing holes through the fixing pins, so that the connecting sleeve is fixedly connected to the slot.

In the cat climbing frame described above, a plurality of annular triangular barbs are provided on the periphery of the fixing pins, and the annular triangular barbs are in interference connection with the fixing holes.

In the cat climbing frame described above, the outer side of the connecting sleeve is provided with a plurality of glue grooves.

In the cat climbing frame described above, the first connector comprises a first tenon and a second tenon which are fixedly connected, the first tenon and the second tenon are provided oppositely, and the first tenon and the second tenon are inserted into the connecting grooves of two adjacent single plates, respectively.

In the cat climbing frame described above, either side of the connecting groove is provided with a guide bar, either side of the first tenon and the second tenon is provided with a guide rail, and the guide bars correspond to the guide rails.

In the cat climbing frame described above, the inner side of the connecting groove is provided with a limiting bump, the outer sides of the first tenon and the second tenon are both provided with a limiting slot, and the limiting bump corresponds to the limiting slot.

In the cat climbing frame described above, either side of the first tenon and the second tenon is provided with an elongated slot, and the elongated slots and the limiting slots are located on the same straight line.

In the cat climbing frame described above, the connecting sleeve is provided with an elastic release groove.

In the cat climbing frame described above, the first connector is provided with a detaching hole.

In the cat climbing frame described above, the cat climbing frame further comprises a cat climbing column, and the cat climbing column is fixedly connected between an upper single plate and a lower single plate provided oppositely through a connecting rod.

In the cat climbing frame described above, the upper end of the connecting rod is provided with a first crossbar, and the lower end of the connecting rod is provided with a second crossbar; the panel is provided with a first connection port and a second connection port; the end of the cat climbing column is provided with a plug, the first crossbar is clamped in the first connecting port, and the first crossbar is clamped in the plug.

In the cat climbing frame described above, the first crossbar and the second crossbar are provided vertically; the first connection port extends into the panel, the second connection port runs through the panel, and the first connection port and the second connection port are provided vertically; and the first crossbar is clamped in the first connecting port.

In the cat climbing frame described above, the plug is provided with a connecting column, the connecting column is provided with a third connecting port and a fourth connecting port, the third connecting port runs through the connecting column, the fourth connecting port is provided on the surface of the connecting column, the third connecting port and the fourth connecting port are provided vertically, and a slope is provided between the third connecting port and the fourth connecting port; and the second crossbar is clamped in the fourth connection port.

In the cat climbing frame described above, the middle of the connecting rod is provided with a first crossbar, the lower end of the connecting rod is provided with a third crossbar; the panel is provided with a first connection port and a second connection port; the end of the cat climbing column is provided with a plug; the first crossbar is clamped in the first connection port of one of the panel, the second crossbar is clamped in the plug of one of the cat climbing columns, and the third crossbar is clamped in the plug of the other cat climbing column.

In the cat climbing frame described above, the first crossbar and the second crossbar are provided vertically, the first crossbar and the third crossbar are provided vertically; the panel is provided with a first connection port and a second connection port, the first connection port extends into the panel, the second connection port runs through the panel, the first connection port and the second connection port are provided vertically; and the first crossbar is clamped in the first connecting port of one of the panels.

In the cat climbing frame described above, the plug is provided with a connecting column, the connecting column is provided with a third connecting port and a fourth connecting port, the third connecting port runs through the connecting column, the fourth connecting port is provided on the surface of the connecting column, the third connecting port and the fourth connecting port are provided vertically, and a slope is provided between the third connecting port and the fourth connecting port; the second crossbar is clamped in the fourth connection port of one of the cat climbing column plugs, and the third crossbar is clamped in the fourth connection port of the other cat climbing column plug.

In the cat climbing frame described above, the second connector comprises a connecting block, a third tenon and a fourth tenon, the third tenon and the fourth tenon are both fixedly connected to the connecting block, the third tenon and the fourth tenon are provided at an included angle, and the first tenon and the second tenon are inserted into the connecting grooves of two adjacent single plates provided horizontally, respectively. Compared with the prior art, the present disclosure has the following advantages.
1. The center of the panel is provided with an open hole, which can be used for cats to shuttle and play. As the circular plate is detachably connected to the open hole of the panel, the circular plate can be folded, so that the circular plate can completely or partially close the open hole selectively. When the open hole is not needed or only the semi-open hole is reserved, it is only necessary to completely or partially close the open hole through the circular plate, which greatly facilitates the trepanning of the single plate, improves the flexibility of the cat climbing frame, avoids replacing the single plate, reassembles the cat climbing frame, and saves manpower.
2. The cat climbing frame is fixed by the first connector and the second connector to realize the splicing assembly of the cat climbing frame. The splicing assembly using the first connector and the second connector greatly improves the assembling efficiency of the cat climbing frame and the diversity of the assembly of the cat climbing frame, and facilitates disassembly.

### BRIEF DESCRIPTION OF THE DRAWINGS

FIG. 1 is a schematic structural diagram of a single plate in Embodiment 1.
FIG. 2 is a schematic structural diagram of a panel in Embodiment 1.
FIG. 3 is a schematic structural diagram of a circular plate in Embodiment 1.
FIG. 4 is a schematic structural diagram of a single plate when a circular plate is in the semi-closed state in Embodiment 1.
FIG. 5 is a schematic structural diagram of a circular plate in a folded state in Embodiment 1.
FIG. 6 is a schematic structural diagram of a supporting block in Embodiment 1.
FIG. 7 is a schematic structural diagram of a single plate in Embodiment 2.
FIG. 8 is a schematic structural diagram of a single plate when a circular plate is in the semi-closed state in Embodiment 2.
FIG. 9 is a schematic structural diagram of a panel in Embodiment 2.
FIG. 10 is a schematic structural diagram of a single plate in Embodiment 3.
FIG. 11 is a schematic structural diagram of a single plate when a circular plate is in the semi-closed state in Embodiment 3.
FIG. 12 is a schematic structural diagram of a panel in Embodiment 3.
FIG. 13 is a schematic structural diagram of a single plate in Embodiment 4.
FIG. 14 is a schematic structural diagram of a single plate when a circular plate is in the semi-closed state in Embodiment 4.
FIG. 15 is a schematic structural diagram of a panel in Embodiment 4.
FIG. 16 is a schematic structural diagram of a cat climbing frame in Embodiment 3.
FIG. 17 is a schematic structural diagram of a first connector in Embodiment 3.
FIG. 18 is a schematic structural diagram of a rivet in Embodiment 3.
FIG. 19 is a schematic structural diagram of a cat climbing frame in Embodiment 4.
FIG. 20 is a schematic structural diagram of a second connector in Embodiment 4.
FIG. 21 is a schematic structural diagram of a cat climbing frame in Embodiment 5.
FIG. 22 is a schematic structural diagram of a cat climbing column in Embodiment 5.
FIG. 23 is a schematic structural diagram of a cat climbing frame in Embodiment 8.
FIG. 24 is a schematic structural diagram of a panel in Embodiment 8.
FIG. 25 is a schematic structural diagram of a connecting sleeve connected to a panel in Embodiment 8.
FIG. 26 is a schematic structural diagram of a connecting sleeve in Embodiment 8.
FIG. 27 is a schematic structural diagram of a connecting sleeve in Embodiment 8 from another perspective.
FIG. 28 is a schematic structural diagram of a first connector in Embodiment 8.
FIG. 29 is a schematic structural diagram of a cat climbing frame in Embodiment 9.
FIG. 30 is a schematic structural diagram of a panel in Embodiment 9.
FIG. 31 is a schematic structural diagram of a panel in Embodiment 9 from another perspective.
FIG. 32 is a schematic structural diagram of a connecting rod in Embodiment 9.
FIG. 33 is a schematic structural diagram of a cat climbing column in Embodiment 9.
FIG. 34 is a schematic structural diagram of a plug in Embodiment 9.
FIG. 35 is a schematic structural diagram of a connecting rod in Embodiment 10.
FIG. 36 is a schematic structural diagram of a second connector in Embodiment 11.

In the figures: 1. Panel; 2. Open hole; 3. Circular plate; 4. Clamping block; 5. Slot; 6. Notch; 7. Mortise; 8. Limiting hole; 9. Contact bead; 10. First semicircular plate; 11. Second semicircular plate; 12. Convex part; 13. Concave part; 14. Rotating shaft; 15. Rotating hole; 16. Supporting block; 17. Plug-in block; 18. Jack; 19. Unfolding part; 20. Bending part; 21. Closing part; 22. Groove; 23. Bump; 24. First chute; 25. First bolt hole; 26. First bolt; 27. V-shaped groove; 28. Limiting protrusion; 29. Limiting groove; 30. First connector; 31. First tenon; 32. Second tenon; 33. Cat climbing column; 34. Fixing part; 35. First clamping part; 36. Second clamping part; 39. Second connector; 40. Connecting block; 41. Third tenon; 42. Fourth tenon; 43. Second bolt hole; 44. Second chute; 45. Second bolt; 46. Third bolt hole; 47. Third chute; 48. Third bolt; 49. Hand-clasping position; 50. First connecting hole; 51. Second connecting hole; 52. Slot; 53. Connecting sleeve; 55. Connecting groove; 56. Fixing hole; 57. Fixing pin; 58. Annular triangle barb; 59. Glue groove; 63. Guide bar; 64. Guide rail; 65. Limiting bump; 66. Limiting slot; 67. Elongated slot; 68. Elastic release groove; 69. Detaching hole; 70. Connecting rod; 71. First crossbar; 72. Second crossbar; 73. First connection port; 74. Second connection port; 75. Plug; 76. Connecting column; 77. Third connection port; 78. Fourth connection port; 9. Slope; 80. Third crossbar

### DETAILED DESCRIPTION OF THE EMBODIMENTS

Specific embodiments of the present disclosure are described hereinafter, and the technical scheme of the present disclosure will be further described with reference to the drawings, but the present disclosure is not limited to these embodiments.

### Embodiment 1:

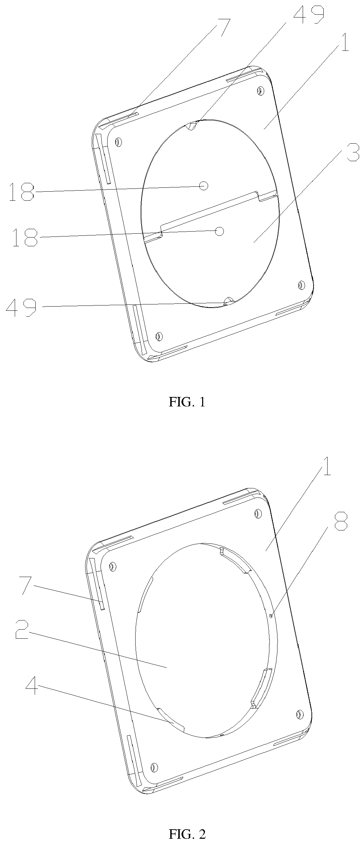

As shown in FIGS. 1-6, the single plate comprises a panel 1 and a circular plate 3, the panel 1 is provided with an open hole 2, and the panel 1 is capable of being spliced into a cat climbing frame; the circular plate 3 is detachably connected to the open hole 2 of the panel 1, and the circular plate 3 is capable of being folded, so that the circular plate 3 is capable of completely or partially closing the open hole 2 selectively.

The single plate is used for assembling a cat climbing frame. In the single plate, the center of the panel 1 is provided with an open hole 2, which can be used for cats to shuttle and play. As the circular plate 3 is detachably connected to the open hole 2 of the panel 1, the circular plate 3 can be folded, so that the circular plate 3 can completely or partially close the open hole 2 selectively. When the open hole 2 is not needed or only the semi-open hole 2 is reserved, it is only necessary to completely or partially close the open hole 2 through the circular plate 3, which greatly facilitates the trepanning of the single plate, improves the flexibility of the cat climbing frame, avoids replacing the single plate, reassembles the cat climbing frame, and saves manpower.

As shown in FIGS. 1-5, in this embodiment, the periphery of the open hole 2 is provided with a plurality of clamping blocks 4, the periphery of the circular plate 3 is provided with a plurality of slots 5 corresponding to the clamping blocks 4 one by one, and the circular plate 3 is clamped to the slots 5 through the clamping blocks 4. The periphery of the circular plate 3 is provided with notches 6 with the same number as the slots 5, and the notches 6 are communicated with the slots 5. The slot 5, the notch 6 and the clamping block 4 have the same length. In this structure, the periphery of the circular plate 3 is provided with notches 6 with the same number as the slots 5, and the notches 6 are communicated with the slots 5. The slot 5, the notch 6 and the clamping block 4 have the same length. When the circular plate 3 needs to be installed on the open hole 2, the clamping blocks 4 are aligned with the notches 6, and the clamping blocks 4 are rotated towards the slots 5, so that the circular plate 3 can be fixed to the open hole 2. When the single plate needs to be provided with an open hole, the clamping block 4 is rotated towards the notch 6, and when the clamping block 4 is aligned with the notch 6, the circular plate 3 can be removed, so that the single plate is provided with an open hole. The circular plate 3 is clamped on the slot 5 of the panel 1 through the clamping block 4, which is convenient for the single plate to be provided with an open hole or to be closed, and improves the flexibility of the cat climbing frame.

As shown in FIGS. 1-5, in this embodiment, the panel 1 is provided with a mortise 7, and two panels 1 are inserted into the mortises 7 through a first connector 30 or a second connector 39 to realize the splicing between the two panels 1. In this structure, the panel 1 is provided with a mortise 7. In one embodiment, four sides of the panel 1 are provided with mortises 7. When it is necessary to splice and assemble the single plate into a cat climbing frame, the edges of the two single plates are aligned, the mortise 7 of the two single plates correspond to each other, and then the two single plates are fixed by the first connector 30 and the second connector 39 to realize the splicing and assembling of the cat climbing frame. By splicing and assembling the first connector 30 and the second connector 39, the assembling efficiency of the cat climbing frame is greatly improved, and the cat climbing frame are assembled in many forms, which is convenient to disassemble.

As shown in FIGS. 1-5, in this embodiment, the open hole 2 is provided with four limiting holes 8 at intervals, and either side of the circular plate 3 is provided with a contact bead 9, and the contact beads 9 is preferably clamped in the two opposite limiting holes 8. In this structure, when the circular plate 3 is installed on the open hole 2, the circular plate 3 is rotated clockwise, so that the clamping block 4 is clamped in the slot 5. At this time, the contact beads 9 on both sides of the circular plate 3 are just clamped in the two opposite limiting holes 8, thus ensuring that the circular plate 3 is firmly fixed to the open hole 2. When the single plate needs to be provided with an open hole, the circular plate 3 is rotated counterclockwise, and the position of the clamping block 4 transitions from the slot 5 on the panel to the notch 6. At the same time, the contact bead 9 exits the limiting hole 8 under the action of force, and the circular plate 3 can be taken out of the open hole 2 at this time.

As shown in FIGS. 1-5, in this embodiment, the circular plate 3 comprises a first semicircular plate 10 and a second semicircular plate 11, the first semicircular plate 10 is rotatably connected with the second semicircular plate 11; when the first semicircular plate 10 and the second semicircular plate 11 are on the same plane, the circular plate 3 completely closes the open hole 2; when the second semicircular plate 11 rotates at 90 degrees towards the first semicircular plate 10, the first semicircular plate 10 closes the lower half of the open hole 2. Specifically, the first semicircular plate 10 is provided with a convex part 12, the second semicircular plate 11 is provided with a concave part 13 consistent with the convex part 12, either side of the convex part 12 is provided with a rotating shaft 14, either side of the concave part 13 is provided with rotating holes 15, and the rotating shafts 14 are rotatably connected in the rotating holes 15. In this structure, the circular plate 3 comprises a first semicircular plate 10 and a second semicircular plate 11 which are hinged with each other. When only a semi-open hole is provided, the first semicircular plate 10 is rotated to the second semicircular plate 11, and then the clamping block 4 outside the second semicircular plate 11 is clamped to the slot 5, so that a semi-open hole is provided, and the diversity of the cat climbing frame is improved.

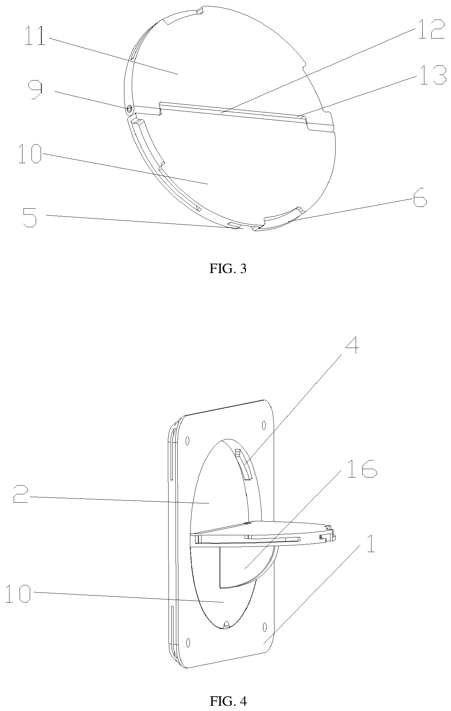

As shown in FIGS. 4-6, in this embodiment, the circular plate 3 is provided with a supporting block 16, the supporting block 16 is provided with two plug-in blocks 17 at 90 degrees, the first semicircular plate 10 and the second semicircular plate 11 are both provided with jacks 18, one of the plug-in blocks 17 is inserted into the jack 18 of the first semicircular plate 10, and the other plug-in block 17 is inserted into the jack 18 of the second semicircular plate 11. In this structure, a supporting block 16 is provided on the circular plate 3, and the supporting block 16 connects the first semicircular plate 10 and the second semicircular plate 11 in a semi-open state to support the first semicircular plate 10.

### Embodiment 2:

The structure of this embodiment is basically the same as that of Embodiment 1, and there is the following difference.

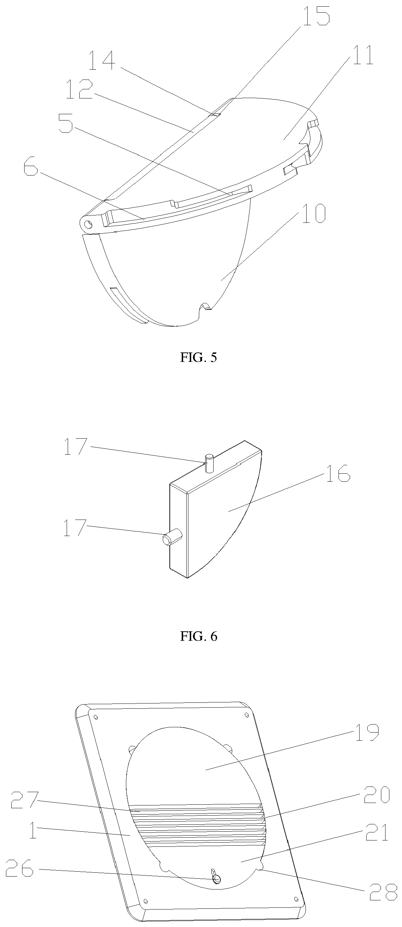

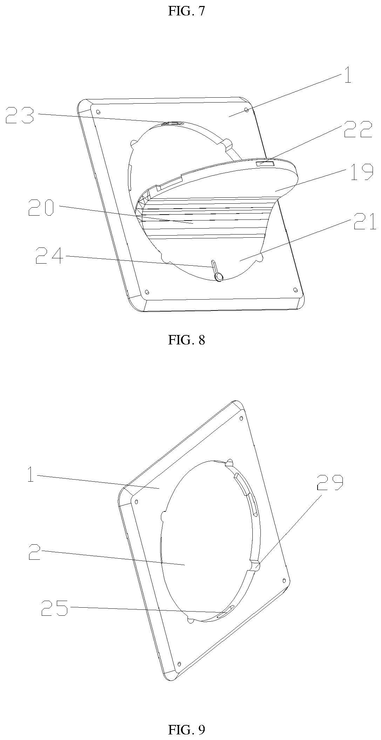

As shown in FIGS. 7-9, in this embodiment, the circular plate 3 comprises an unfolding part 19, a bending part 20 and a closing part 21, and the unfolding part 19, the bending part 20 and the closing part 21 are connected in sequence to form the circular plate 3. The unfolding part 19 is provided with a groove 22, and the panel 1 is provided with a bump 23. The groove 22 corresponds to the bump 23, and the bump 23 can be clamped in the groove 22. The closing part 21 is provided with a chute 24, and the panel 1 is provided with a bolt hole 25. The chute 24 corresponds to the bolt hole 25, and the closing part 21 is fixed to the bolt hole 25 through the chute 24 via a bolt 26. The folding part is provided with a plurality of V-shaped grooves 27. In this structure, the circular plate 3 comprises an expanding part 19, a bending part 20 and a closing part 21. When the open hole 2 needs to be closed, the expanding part 19, the bending part 20 and the closing part 21 are on the same plane, and are clamped in the groove 22 by the bump 23. The bolt 26 on the closing part 21 is fixed in the bolt hole 25 through the chute 24, so that the circular plate 3 closes the open hole 2. When the open hole needs to be half-opened, since the folding part is provided with a plurality of V-shaped grooves 27, that is, the folding part can be folded along the V-shaped grooves 27, the unfolding part 19 is unfolded along the folding part, and the first bolt 26 on the closing part 21 is fixed to the first bolt hole 25 through the first chute 24, so that the circular plate 3 is provided with a semi-open hole.

As shown in FIGS. 7-9, in this embodiment, the circumference of the circular plate 3 is provided with a plurality of limiting protrusions 28, and the circumference of the open hole 2 is provided with a plurality of limiting grooves 29 corresponding to the limiting protrusions 28 one by one. In this structure, the circumference of the circular plate 3 is provided with a plurality of limiting protrusions 28, and the circumference of the open hole 2 is provided with a plurality of limiting grooves 29 corresponding to the limiting protrusions 28 one by one. When the circular plate 3 completely or partially closes the open hole 2, the limiting protrusions 28 can effectively limit the movement of the circular plate 3.

In this embodiment, the circular plate 3 is provided with a hand-clasping position 49. In this structure, it is convenient to rotate the circular plate 3 by providing the hand-clasping position 49. Specifically, the hand-clasping position 49 is a semicircular groove. In other embodiments, the circular plate 3 can be provided with two hand-clasping positions 49, and the two hand-clasping positions 49 are provided opposite to each other.

### Embodiment 3:

The structure of this embodiment is basically the same as that of Embodiment 1, and there is the following difference.

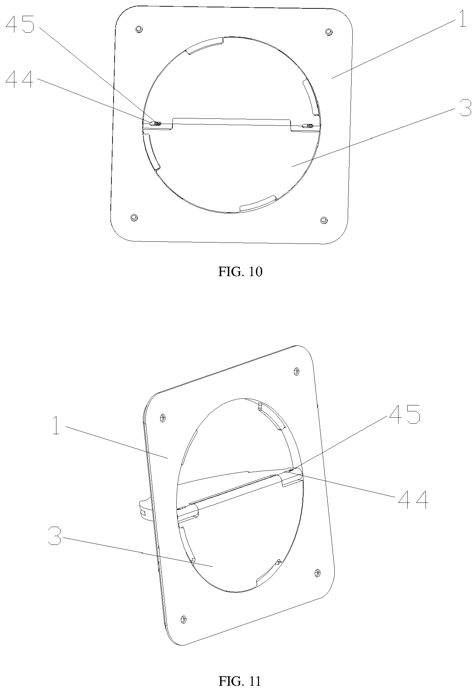

As shown in FIGS. 10-12, in this embodiment, the open hole 2 is provided with four second bolt holes 43 at intervals, either side of the circular plate 3 is provided with a second chute 44, two of the second chutes 44 correspond to two of the second bolt holes 43, and the circular plate 3 is fixed in the second bolt hole 43 through the second chute 44 via a second bolt 45. In this structure, when the circular plate 3 is installed on the open hole 2, the circular plate 3 is rotated clockwise, so that the clamping block 4 is clamped in the slot 5. At this time, the second chutes 44 on both sides of the circular plate 3 are just opposite to the second bolt holes 43 on both sides of the open hole 2. The circular plate 3 is fixed to the second bolt holes 43 by the second bolt 45, so that the circular plate 3 can be firmly fixed to the open hole 2. When the single plate needs to be provided with the open hole 2, the second bolt 45 is taken out of the second bolt hole 43, the circular plate 3 is rotated counterclockwise, and the position of the clamping block 4 transitions from the slot 5 on the panel 1 to the notch 6. At this time, the circular plate 3 can be taken out of the open hole 2.

### Embodiment 4:

The structure of this embodiment is basically the same as that of Embodiment 1, and there is the following difference.

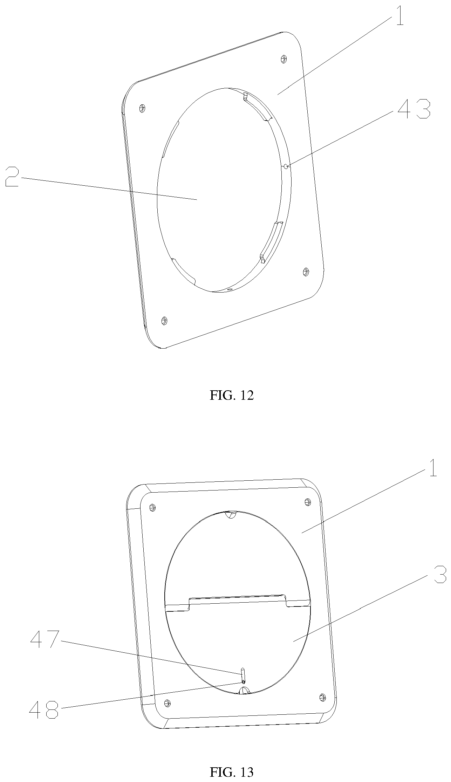

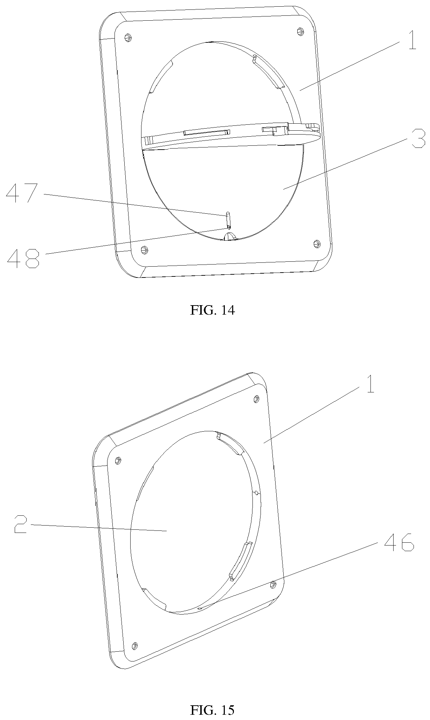

As shown in FIGS. 13-15, in this embodiment, the bottom of the open hole 2 is provided with a third bolt hole 46, the bottom of the circular plate 3 is provided with a third chute 47, the third chute 47 corresponds to the third bolt hole 46, and the bottom of the circular plate 3 is fixed in the third bolt hole 46 through the third chute 47 via a third bolt 48. In this structure, when the circular plate 3 is installed on the open hole 2, the circular plate 3 is rotated clockwise, so that the clamping block 4 is clamped in the slot 5. At this time, the second chutes 44 on both sides of the circular plate 3 are just opposite to the second bolt holes 43 on both sides of the open hole 2. The circular plate 3 is fixed to the second bolt holes 43 by the second bolt 45, so that the circular plate 3 can be firmly fixed to the open hole 2. When the single plate needs to be provided with the open hole 2, the third bolt 48 is taken out of the third bolt hole 46, the circular plate 3 is rotated counterclockwise, and the position of the clamping block 4 transitions from the slot 5 on the panel 1 to the notch 6. At this time, the circular plate 3 can be taken out of the open hole 2.

### Embodiment 5:

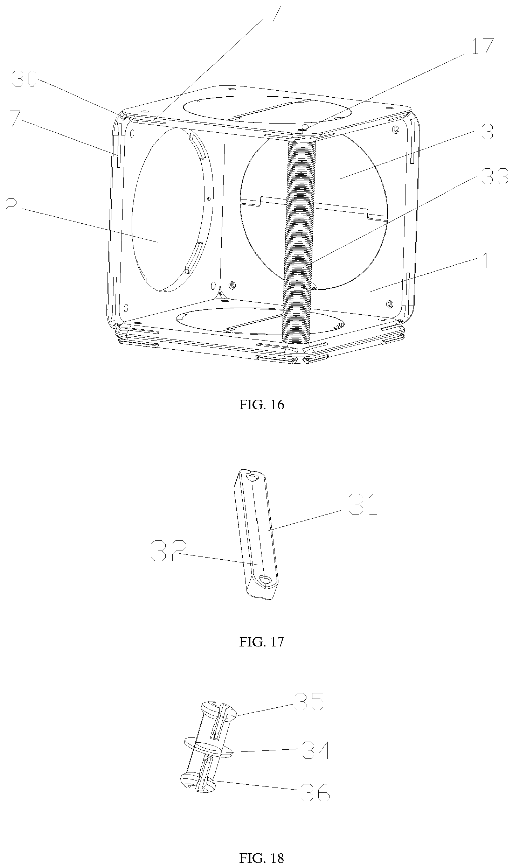

As shown in FIG. 16-18, this embodiment provides a cat climbing frame, which comprises a plurality of single plates in Embodiment 1, Embodiment 2, Embodiment 3 or Embodiment 4 and a first connector 30, wherein the plurality of single plates are enclosed into a cat climbing frame, and two adjacent single plates are perpendicular to each other; the first connector 30 is inserted into the mortise 7 of two adjacent single plates. Specifically, the first connector 30 comprises a first tenon 31 and a second tenon 32 which are fixedly connected, the first tenon 31 and the second tenon 32 are provided oppositely, and the first tenon 31 and the second tenon 32 are inserted into the mortises 7 of two adjacent single plates.

In the cat climbing frame, two adjacent single plates are perpendicular to each other, and the single plate is provided with the mortise 7. The first tenon 31 and the second tenon 32 of the first connector 30 are inserted into the mortises 7 of two adjacent single plates, respectively, so as to realize the vertical splicing between the two single plates. According to the actual situation, several single plates are spliced to form various cat climbing frames. When the cat climbing frame needs to be transferred, because two adjacent single plates are connected by the first connector 30, the cat climbing frame can be disassembled only by pulling out the first connector 30 from the mortise 7, which is simple to operate, and can avoid damaging the single plates and ensure the quality of the cat climbing frame.

As shown in FIGS. 16, 17, 18 and 21, in this embodiment, the cat climbing frame further comprises a cat climbing column 33, and the cat climbing column 33 is fixedly connected between an upper single plate and a lower single plate provided oppositely by rivets. Specifically, the rivet comprises a fixing part 34, both ends of the fixing part 34 are provided with a first clamping part 35 and a second clamping part 36, respectively, the single plate is provided with a first connecting hole 50, the cat climbing column 33 is provided with a second connecting hole 51, the first clamping part 35 is clamped to the first connecting hole 50, and the second clamping part 36 is clamped to the second connecting hole 51. In this structure, the cat climbing column 33 is fixedly connected between an upper single plate and a lower single plate provided oppositely by rivets. The cat climbing column 33 can be used for cats to climb and play, so that the diversity of the cat climbing frame is improved. Moreover, the first clamping part 35 is clamped to the first connecting hole 50 by rivets, and the second clamping part 36 is clamped to the second connecting hole 51, so that the cat climbing column 33 is firmly connected. The cat climbing column 33 can be conveniently disassembled because of the clamping connection.

### Embodiment 6:

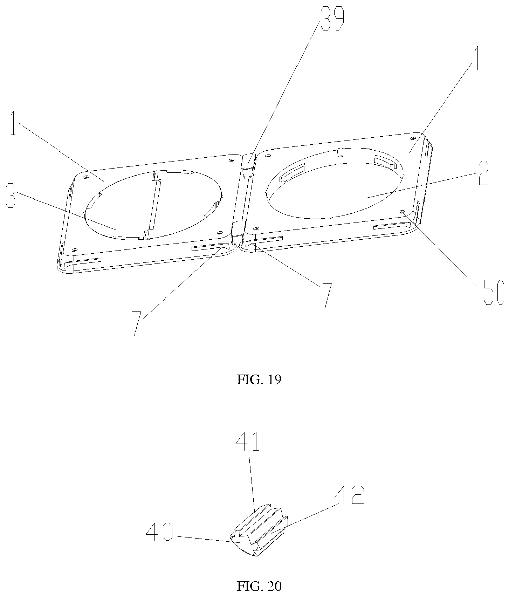

As shown in FIG. 19-20, this embodiment provides a cat climbing frame, which comprises a plurality of single plates in Embodiment 1, Embodiment 2, Embodiment 3 or Embodiment 4 and a second connector 39, wherein two adjacent single plates are located on the same plane; the second connector 39 is inserted into the mortise 7 of two adjacent single plates. Specifically, the second connector 39 comprises a connecting block 40, a third tenon 41 and a fourth tenon 42, the third tenon 41 and the fourth tenon 42 are both fixedly connected to the connecting block 40, the third tenon 41 and the fourth tenon 42 are provided at an included angle, and the third tenon 41 and the fourth tenon 42 are inserted into the mortises 7 of two adjacent single plates provided horizontally, respectively.

In the cat climbing frame, two adjacent single plates are located on the same plane, and the single plate is provided with the mortise 7. The third tenon 41 and the fourth tenon 42 of the second connector 39 are inserted into the mortises 7 of two adjacent single plates, respectively, so as to realize the same plane splicing between the two single plates. According to the actual situation, several single plates are spliced to form various cat climbing frames. When the cat climbing frame needs to be transferred, because two adjacent single plates are connected by the second connector 39, the cat climbing frame can be disassembled only by pulling out the second connector 39 from the mortise 7, which is simple to operate, and can avoid damaging the single plates and ensure the quality of the cat climbing frame.

### Embodiment 7:

As shown in FIG. 1-22, this embodiment provides a cat climbing frame, comprising: N+M single plates single plates in Embodiment 1, Embodiment 2, Embodiment 3 or Embodiment 4, the single plates described above, the first connector 30 and the second connector 39, where N+M is greater than or equal to 3 and m is greater than or equal to 2; wherein M single plates are enclosed into a cat climbing frame body, and two adjacent single plates in the frame body are perpendicular to each other; N single plates and the adjacent single plates thereof are located on the same plane; the first connector 30 is inserted into the mortise 7 of two adjacent single plates provided vertically; the second connector 39 is inserted into the mortise 7 of two adjacent single plates on the same plane. Specifically, the first connector 30 comprises a first tenon 31 and a second tenon 32 which are fixedly connected, the first tenon 31 and the second tenon 32 are provided oppositely, and the first tenon 31 and the second tenon 32 are inserted into the mortises 7 of two adjacent single plates provided vertically, respectively. The second connector 39 comprises a connecting block 40, a third tenon 41 and a fourth tenon 42, the third tenon 41 and the fourth tenon 42 are both fixedly connected to the connecting block 40, the third tenon 41 and the fourth tenon 42 are provided at an included angle, and the third tenon 41 and the fourth tenon 42 are inserted into the mortises 7 of two adjacent single plates provided horizontally, respectively.

In the cat climbing frame, M single plates are enclosed into a cat climbing frame body, and two adjacent single plates in the frame body are perpendicular to each other. The single plate is provided with the mortise 7. The first tenon 31 and the second tenon 32 of the first connector 30 are inserted into the mortises 7 of the two adjacent single plates, respectively, to realize vertical splicing between the two single plates. N single plates and the adjacent single plates thereof are located on the same plane. The single plate is provided with the mortise 7. The third tenon 41 and the fourth tenon 42 of the second connector 39 are inserted into the mortises 7 of the two adjacent single plates, respectively, so as to realize the same plane splicing between the two single plates. According to the actual situation, M+N single plates are spliced to form various cat climbing frames. When the cat climbing frame needs to be transferred, because two adjacent single plates are connected by the second connector 39, the cat climbing frame can be disassembled only by pulling out the second connector 39 from the mortise 7, which is simple to operate, and can avoid damaging the single plates and ensure the quality of the cat climbing frame.

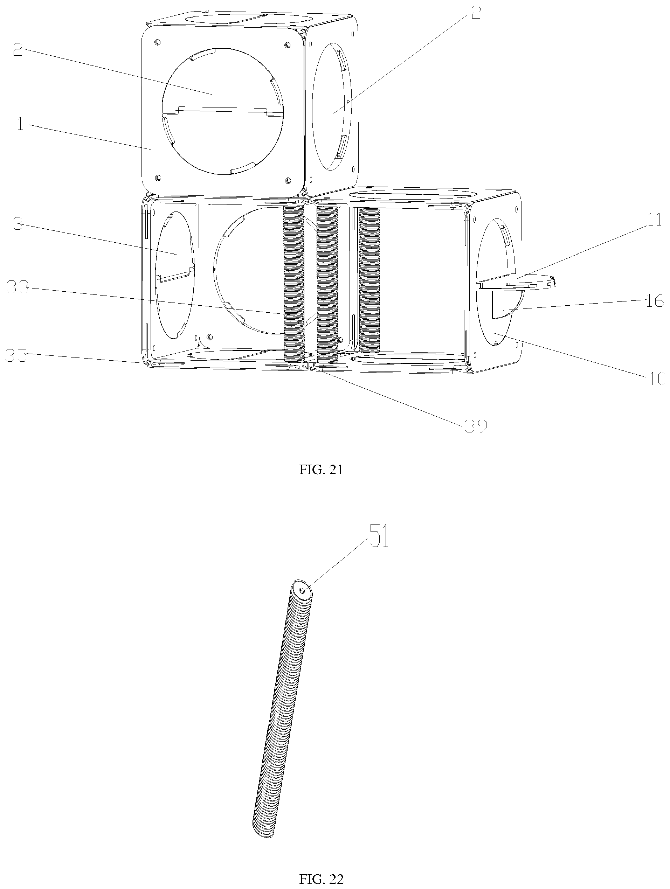

As shown in FIGS. 18 and 21, in this embodiment, the cat climbing frame further comprises a cat climbing column 33, and the cat climbing column 33 is fixedly connected between an upper single plate and a lower single plate which are provided oppositely by rivets. Specifically, the rivet comprises a fixing part 34, both ends of the fixing part 34 are provided with a first clamping part 35 and a second clamping part 36, respectively, the single plate is provided with a first connecting hole, the cat climbing column 33 is provided with a second connecting hole, the first clamping part is clamped to the first connecting hole, and the second clamping part 36 is clamped to the second connecting hole. In this structure, the cat climbing column 33 is fixedly connected between an upper single plate and a lower single plate provided oppositely by rivets. The cat climbing column 33 can be used for cats to climb and play, so that the diversity of the cat climbing frame is improved. Moreover, the first clamping part 35 is clamped to the first connecting hole by rivets, and the second clamping part 36 is clamped to the second connecting hole, so that the cat climbing column 33 is firmly connected. The cat climbing column 33 can be conveniently disassembled because of the clamping connection.

### Embodiment 8:

The structure of this embodiment is basically the same as that of Embodiment 1, and there is the following difference.

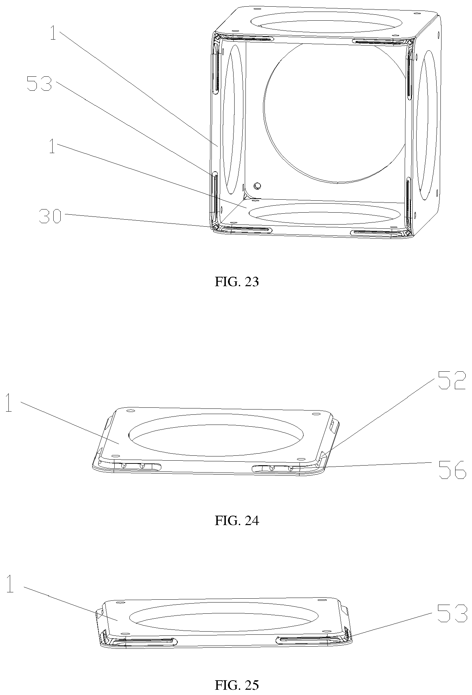

As shown in FIG. 23-28, the panel is provided with a slot 52, the slot 52 is provided with a connecting sleeve 53, the connecting sleeve 53 is provided with a connecting groove 55, and two adjacent panels are inserted into the connecting groove 55 through the first connector to realize splicing between the two panels. Specifically, the connecting sleeve 53 is provided with a plurality of fixing pins 57 corresponding to the fixing holes 56, and the connecting sleeve 53 is inserted into the fixing holes 56 through the fixing pin 57, so that the connecting sleeve 53 is fixedly connected to the slot 52. In this structure, when two adjacent single plates provided vertically are connected, the first connector is inserted into the connecting groove 55 of the connecting sleeve 53 on the adjacent panels, thus realizing the splicing of two adjacent single plates provided vertically.

As shown in FIGS. 25-27, in this embodiment, a plurality of annular triangular barbs 58 are provided on the periphery of the fixing pin 57, and the annular triangular barbs 58 are in interference connection with the fixing holes 56. In this structure, the angle of the annular triangular barbs 58 is controlled in the range of 30-60 degrees, and the angle of the annular triangular barbs 58 has an interference of 0.1mm with the fixing holes 56. The distance between two adjacent rows of annular triangular barbs 58 is 2mm, which can effectively prevent the fixing pins 57 from coming out. The fixing pins 57 are fixed in the fixing holes 56, thus ensuring the installation error of the first connector.

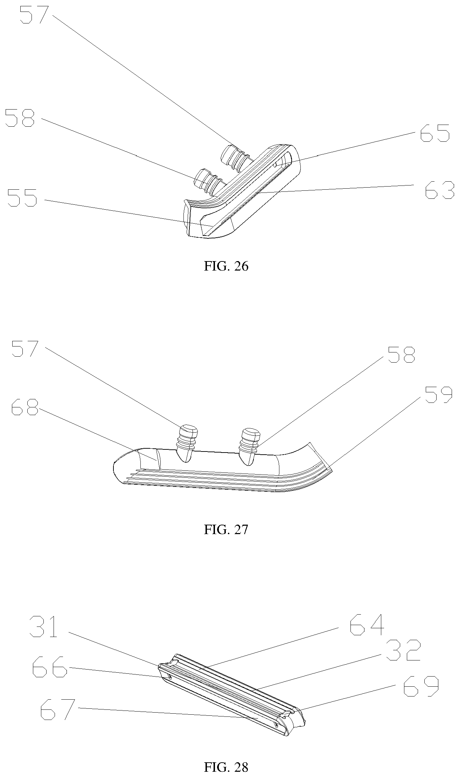

As shown in FIGS. 26 and 27, in this embodiment, the outer side of the connecting sleeve 53 is provided with a plurality of glue grooves 59. In this structure, the outer side of the connecting sleeve 53 is provided with a plurality of glue grooves 59, and the connecting sleeve 53 is fixed to the slot 52 of the panel by injecting glue through the glue grooves 59.

As shown in FIG. 28, in this embodiment, the first connector comprises a first tenon 31 and a second tenon 32 which are fixedly connected, the first tenon 31 and the second tenon 32 are provided oppositely, and the first tenon 31 and the second tenon 32 are inserted into the connecting grooves 55 of two adjacent single plates, respectively. Specifically, either side of the connecting groove 55 is provided with a guide bar 63, either side of the first tenon 31 and the second tenon 32 is provided with a guide rail 64, and the guide bars 63 correspond to the guide rails 64. The inner side of the connecting groove 55 is provided with a limiting bump 65, and the outer sides of the first tenon 31 and the second tenon 32 are provided with a limiting slot 66, and the limiting bump 65 corresponds to the limiting slot 66. In this structure, the guide bar 63 corresponds to the guide rail 64. When the first connector is in the connecting groove 55, the guide bar 63 and the guide rail 64 play a guiding role, and the limiting bump 65 is fixed in the limiting slot 66, so that the first connector is clamped in the connecting groove 55.

As shown in FIG. 28, in this embodiment, either side of the first tenon 31 and the second tenon 32 is provided with an elongated slot 67, and the elongated slots 67 and the limiting slots 66 are located on the same straight line. In this structure, the elongated slots 67 and the limiting slots 66 are located on the same straight line. When the first connector is inserted into the connecting groove 55, the elongated slot 67 can prevent the limiting bump 65 from interfering with the first connector, thus ensuring that the first connector is smoothly inserted into the connecting groove 55.

As shown in FIGS. 23-28, in this embodiment, the connecting sleeve 53 is provided with an elastic release groove 68, and the elastic release groove 68 is located on the opposite side of the limiting bump 65. In this structure, the depth of the elastic release groove 68 is 1mm. Since the limiting bump 65 is an elastically deformed structure, the limiting bump 65 will be insufficiently elastic when the connecting sleeve 53 is too thick. Therefore, the elasticity of the limiting bump 65 is ensured by providing the elastic release groove 68.

As shown in FIG. 28, in this embodiment, the first connector is provided with a detaching hole 69. In this structure, the installation of the first connector is facilitated by providing the detaching hole 69.

### Embodiment 9:

The structure of this embodiment is basically the same as that of Embodiment 7, and there is the following difference.

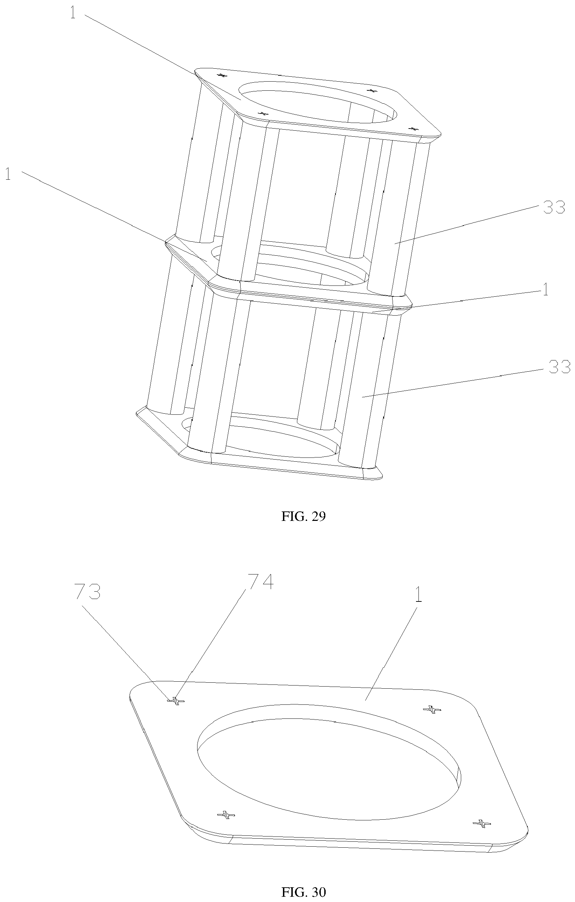

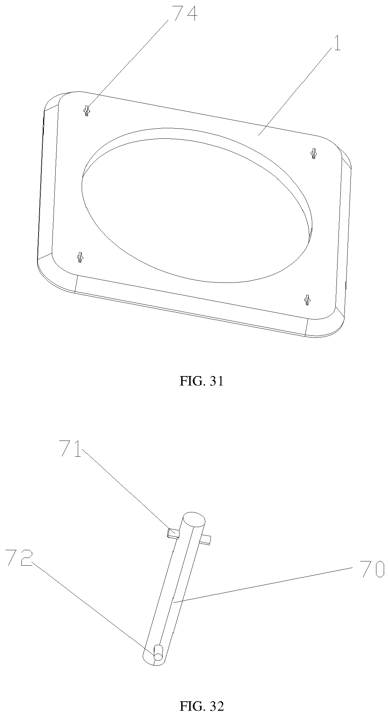

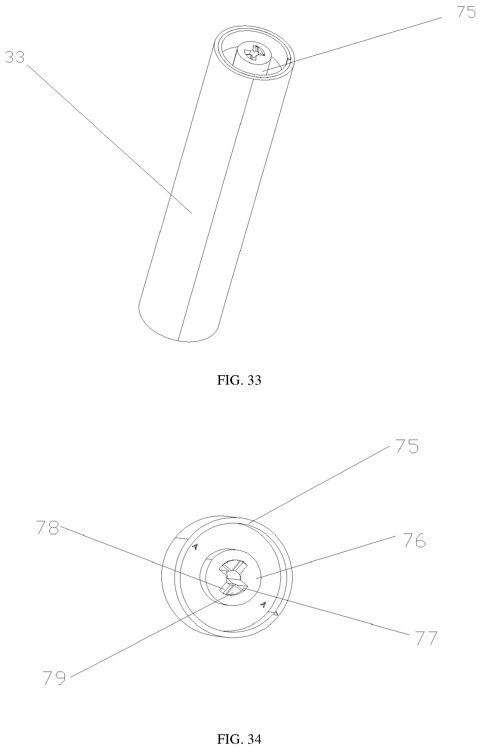

As shown in FIG. 29-34, the cat climbing frame further comprises a cat climbing column 33, and the cat climbing column 33 is fixedly connected between an upper single plate and a lower single plate provided oppositely through a connecting rod 70.

As shown in FIG. 29-34, specifically, the upper end of the connecting rod 70 is provided with a first crossbar 71, and the lower end of the connecting rod 70 is provided with a second crossbar 72. The first crossbar 71 and the second crossbar 72 are provided vertically; the panel 1 is provided with a first connection port 73 and a second connection port 74, the first connection port 73 extends into the panel 1, the second connection port 74 runs through the panel 1, and the first connection port 73 and the second connection port 74 are provided vertically; the end of the cat climbing column 33 is provided with a plug 75, a connecting column 76 is provided on the plug 75, a third connection port 77 and a fourth connection port 78 are provided on the connecting column 76, the third connection port 77 runs through the connecting column 76, the fourth connection port 78 is provided on the surface of the connecting column 76, the third connection port 77 and the fourth connection port 78 are provided vertically, and a slope 79 is provided between the third connection port 77 and the fourth connection port 78; the first crossbar 71 is clamped in the first connecting port 73, and the second crossbar 72 is clamped in the fourth connecting port 78.

When assembling the cat climbing frame, the second crossbar 72 of the connecting rod 70 is aligned with the second connecting port 74 on the panel 1. Because the second connecting port 74 runs through the panel 1, while the first connecting port 73 extends into the panel 1, the second crossbar 72 passes through the panel 1; the end face of the cat climbing column 33 is provided with a plug 75, a connecting column 76 is provided on the plug 75, the third connecting port 77 runs through the connecting column 76, and the fourth connecting port 78 is provided on the surface of the connecting column 76. At this time, the second crossbar 72 is aligned with the third connecting port 77 and passes through the connecting column 76, and then the cat climbing column 33 is rotated. Because a slope 79 is provided between the third connecting port 77 and the fourth connecting port 78, the second crossbar 72 is clamped into the fourth connecting port 78 along the slope 79, realizing the connection between the panel 1 and the cat climbing column 33.

### Embodiment 10:

The structure of this embodiment is basically the same as that of Embodiment 9, and there is the following difference.

As shown in FIGS. 29-35, the upper end of the connecting rod 70 is provided with a second crossbar 72, the middle of the connecting rod 70 is provided with a first crossbar 71, the lower end of the connecting rod 70 is provided with a third crossbar 80, the first crossbar 71 and the second crossbar 72 are provided vertically, and the first crossbar 71 and the third crossbar 80 are provided vertically. The panel 1 is provided with a first connection port 73 and a second connection port 74, the first connection port 73 extends into the panel 1, and the second connection port 74 runs through the panel 1, and the first connection port 73 and the second connection port 74 are provided vertically. The end of the cat climbing column 33 is provided with a plug 75. A connecting column 76 is provided on the plug 75. A third connection port 77 and a fourth connection port 78 are provided on the connecting column 76. The third connection port 77 runs through the connecting column 76. The fourth connection port 78 is provided on the surface of the connecting column 76. The third connection port 77 and the fourth connection port 78 are provided vertically. A slope 79 is provided between the third connecting port 77 and the fourth connecting port 78. The first crossbar 71 is clamped in the first connecting port 73 of one of the panels 1, the second crossbar 72 is clamped in the fourth connecting port 78 of the plug 75 of one of the cat climbing columns 33, and the third crossbar 80 is clamped in the fourth connecting port 78 of the plug 75 of the other cat climbing column 33.

When assembling the cat climbing frame, the cat climbing frame has an upper layer and a lower layer. There are two panels 1 in the middle, and the two panels 1 are provided oppositely. The second crossbar 72 of the connecting rod 70 is aligned with the second connecting port 74 of the two opposite panels 1 on the panel 1. The second crossbar 72 and the third crossbar 80 pass through the panel 1 along the second connecting port 74 of the two panels 1, respectively. The end face of the cat climbing column 33 is provided with a plug 75. The plug 75 is provided with a connecting column 76. The third connecting port 77 runs through the connecting column 76, and the fourth connecting port 78 is provided on the surface of the connecting column 76. At this time, the second crossbar 72 and the third crossbar 80 are aligned with the third connecting port 77 of the plug 75 on the upper and lower cat climbing columns 33 and pass through the connecting column 76. Then, two cat climbing columns 33 are rotated at the same time. As a slope 79 is provided between the third connecting port 77 and the fourth connecting port 78, the second crossbar 72 and the third crossbar 80 are clamped into the fourth connecting port 78 of the two plugs 75 along the slopes 79 of the two plugs 75, thus realizing connection between the panel 1 of the two-layer cat climbing frame and the cat climbing column 33.

### Embodiment 11:

The structure of this embodiment is basically the same as that of Embodiment 8, and there is the following difference.

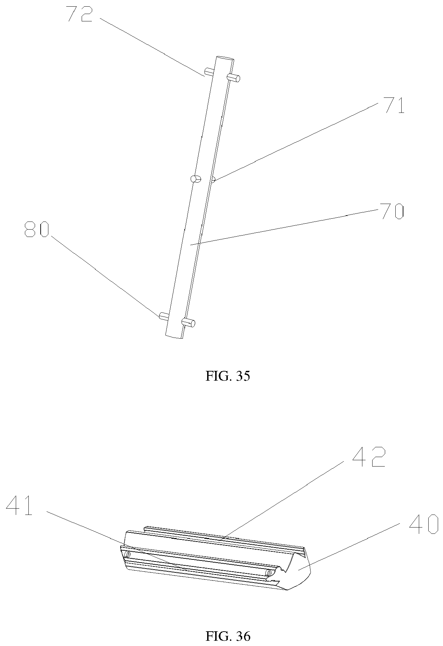

As shown in FIG. 36, in this embodiment, the second connector 39 comprises a connecting block 40, a third tenon 41 and a fourth tenon 42. The third tenon 41 and the fourth tenon 42 are both fixedly connected to the connecting block 40. The third tenon 41 and the fourth tenon 42 are provided at an included angle. The third tenon 41 and the fourth tenon 42 are inserted into the connecting grooves 55 of two adjacent single plates provided horizontally, respectively. In this structure, two adjacent single plates provided horizontally are connected horizontally by the third tenon 41 and the fourth tenon 42.

The specific embodiments described in the present disclosure only illustrate the spirit of the present disclosure. Those skilled in the art to which the present disclosure belongs can make various modifications or supplements to the described specific embodiments or replace them in a similar manner without departing from the spirit of the present disclosure or exceeding the scope defined by the appended claims.

## Claims

1. A single plate for assembling a cat climbing frame, comprising:
a panel (1), wherein the panel (1) is provided with an open hole (2), and the panel (1) is capable of being spliced into a cat climbing frame;
a circular plate (3), wherein the circular plate (3) is detachably connected to the open hole (2) of the panel (1), and the circular plate (3) is capable of being folded, so that the circular plate (3) is capable of completely or partially closing the open hole (2) selectively.

2. The single plate for assembling a cat climbing frame according to claim 1, wherein the periphery of the open hole (2) is provided with a plurality of clamping blocks (4), the periphery of the circular plate (3) is provided with a plurality of slots (5) corresponding to the clamping blocks (4) one by one, and the circular plate (3) is clamped to the slots (5) through the clamping blocks (4); the periphery of the circular plate (3) is provided with notches (6) with the same number as the slots (5), and the notches (6) are communicated with the slots (5).

3. The single plate for assembling a cat climbing frame according to claim 1, wherein the panel (1) is provided with a mortise (7), and two panels (1) are inserted into the mortises (7) through a first connector (30) or a second connector (39) to realize the splicing between the two panels (1).

4. The single plate for assembling a cat climbing frame according to claim 1, wherein the circular plate (3) comprises a first semicircular plate (10) and a second semicircular plate (11), the first semicircular plate (10) is rotatably connected with the second semicircular plate (11); when the first semicircular plate (10) and the second semicircular plate (11) are on the same plane, the circular plate (3) completely closes the open hole (2); when the second semicircular plate (11) rotates at 90 degrees towards the first semicircular plate (10), the first semicircular plate (10) closes the lower half of the open hole (2); the first semicircular plate (10) is provided with a convex part (12), the second semicircular plate (11) is provided with a concave part (13) consistent with the convex part (12), either side of the convex part (12) is provided with a rotating shafts (14), either side of the concave part (13) is provided with rotating holes (15), and the rotating shaft (14) are rotatably connected in the rotating holes (15); the circular plate (3) is provided with a supporting block (16), the supporting block (16) is provided with two plug-in blocks (17) at 90 degrees, the first semicircular plate (10) and the second semicircular plate (11) are both provided with jacks (18), one of the plug-in blocks (17) is inserted into the jack (18) of the first semicircular plate (10), and the other plug-in block (17) is inserted into the jack (18) of the second semicircular plate (11).

5. The single plate for assembling a cat climbing frame according to claim 1, wherein the circular plate (3) comprises an unfolding part (19), a bending part (20) and a closing part (21), and the unfolding part (19), the bending part (20) and the closing part (21) are connected in sequence to form the circular plate (3); the unfolding part (19) is provided with a groove (22), and the panel (1) is provided with a bump (23); the groove (22) corresponds to the bump (23), and the bump (23) can be clamped in the groove (22); the closing part (21) is provided with a chute (24), and the panel (1) is provided with a bolt hole (25), the chute (24) corresponds to the bolt hole (25), and the closing part (21) is fixed to the bolt hole (25) through the chute (24) via a bolt (26); the folding part is provided with a plurality of V-shaped grooves (27); the circumference of the circular plate (3) is provided with a plurality of limiting protrusions (28), and the circumference of the open hole (2) is provided with a plurality of limiting grooves (29) corresponding to the limiting protrusions (28) one by one.

6. The single plate for assembling a cat climbing frame according to claim 1, wherein the open hole (2) is provided with four second bolt holes (43) at intervals, either side of the circular plate (3) is provided with a second chute (44), two of the second chutes (44) correspond to two of the second bolt holes (43), and the circular plate (3) is fixed in the second bolt hole (43) through the second chute (44) via a second bolt (45).

7. The single plate for assembling a cat climbing frame according to claim 1, wherein the bottom of the open hole (2) is provided with a third bolt hole (46), the bottom of the circular plate (3) is provided with a third chute (47), the third chute (47) corresponds to the third bolt hole (46), and the bottom of the circular plate (3) is fixed in the third bolt hole (46) through the third chute (47) via a third bolt (48).

8. A cat climbing frame, comprising:
a plurality of single plates according to any one of claims 1-7, wherein the plurality of single plates are enclosed into a cat climbing frame, and two adjacent single plates are perpendicular to each other;
a first connector (30), wherein the first connector (30) is inserted into the mortise (7) of two adjacent single plates.

9. The cat climbing frame according to claim 8, wherein the first connector (30) comprises a first tenon (31) and a second tenon (32) which are fixedly connected, the first tenon (31) and the second tenon (32) are provided oppositely, and the first tenon (31) and the second tenon (32) are inserted into the mortises (7) of two adjacent single plates.

10. The cat climbing frame according to claim 8, wherein the cat climbing frame further comprises a cat climbing column (33), and the cat climbing column (33) is fixedly connected between an upper single plate and a lower single plate provided oppositely by rivets; the rivet comprises a fixing part (34), both ends of the fixing part (34) are provided with a first clamping part (35) and a second clamping part (36), respectively, the single plate is provided with a first connecting hole (50), the cat climbing column (33) is provided with a second connecting hole (51), the first clamping part (35) is clamped to the first connecting hole (50), and the second clamping part (36) is clamped to the second connecting hole (51).

11. A cat climbing frame, comprising:
a plurality of single plates according to any one of claims 1-7, wherein two adjacent single plates are located on the same plane;
a second connector (39), wherein the second connector (39) is inserted into the mortise (7) of two adjacent single plates.

12. The cat climbing frame according to claim 11, wherein the second connector (39) comprises a connecting block (40), a third tenon (41) and a fourth tenon (42), the third tenon (41) and the fourth tenon (42) are both fixedly connected to the connecting block (40), the third tenon (41) and the fourth tenon (42) are provided at an included angle, and the third tenon (41) and the fourth tenon (42) are inserted into the mortises (7) of two adjacent single plates provided horizontally, respectively.

13. A cat climbing frame, comprising:
N+M single plates according to any one of claims 1-7, where N+M is greater than or equal to 3 and M is greater than or equal to 2; wherein M single plates are enclosed into a cat climbing frame body, and two adjacent single plates in the frame body are perpendicular to each other; N single plates and the adjacent single plates thereof are located on the same plane;
a first connector (30), wherein the first connector (30) is inserted into the mortise (7) of two adjacent single plates provided vertically;
a second connector (39), wherein the second connector (39) is inserted into the mortise (7) of two adjacent single plates on the same plane.

14. The cat climbing frame according to claim 13, wherein the first connector (30) comprises a first tenon (31) and a second tenon (32) which are fixedly connected, the first tenon (31) and the second tenon (32) are provided oppositely, and the first tenon (31) and the second tenon (32) are inserted into the mortises (7) of two adjacent single plates provided vertically, respectively; the second connector (39) comprises a connecting block (40), a third tenon (41) and a fourth tenon, the third tenon (41) and the fourth tenon are both fixedly connected to the connecting block (40), the third tenon (41) and the fourth tenon are provided at an included angle, and the third tenon (41) and the fourth tenon are inserted into the mortises (7) of two adjacent single plates provided horizontally, respectively.

15. The cat climbing frame according to claim 13, wherein the cat climbing frame further comprises a cat climbing column (33), and the cat climbing column (33) is fixedly connected between an upper single plate and a lower single plate which are provided oppositely by rivets; the rivet comprises a fixing part (34), both ends of the fixing part (34) are provided with a first clamping part (35) and a second clamping part (36), respectively, the single plate is provided with a first connecting hole (50), the cat climbing column (33) is provided with a second connecting hole (51), the first clamping part (35) is clamped to the first connecting hole (50), and the second clamping part (36) is clamped to the second connecting hole (51).
